# EUROPEAN PATENT SPECIFICATION

(11) **EP 4 684 638 B1**
(45) Date of publication and mention of the grant of the patent: **12.08.2026**
(21) Application number: 25189817.7
(22) Date of filing: 16.07.2025
(51) Int. Cl.: A01N 25/30, A01N 25/34, A01N 43/16, C09D 5/14, C09D 5/16, A01N 25/10

(54) **METHOD FOR COATING SEEDS**
VERFAHREN ZUM BESCHICHTEN VON SAATGUT
PROCÉDÉ D'ENROBAGE DE SEMENCES

(30) Priority: 25.07.2024 IT 202400017323
(43) Date of publication of application: 28.01.2026
(73) Proprietor: Lamberti SPA, 21041 Albizzate (VA) (IT)
(72) Inventor: MASCARO, Andrea, 21013 Gallarate (VA) (IT); MANISCALCO, Sabrina, 21052 Busto Arsizio (VA) (IT); BARCELLONA, Cristina, 20025 Legnano (MI) (IT); BOSSI, Thierry, 21030 Azzio (VA) (IT); DE PELLEGRINI, Federico, 21041 Albizzate (VA) (IT); ESPOSITO, Simona, 21013 Gallarate (VA) (IT)
(74) Representative: Giaroni, Paola

(56) References cited:
- WO-A1-2016/055439
- WO-A1-2024/003339
- CN-A- 112 335 665
- MEIMOUN JULIE ET AL: "A one pot one step combined radical and ring-opening route for the dual functionalization of starch in aqueous medium", CARBOHYDRATE POLYMERS, APPLIED SCIENCE PUBLISHERS , LTD BARKING, GB, vol. 254, 13 November 2020 (2020-11-13), XP086423509, ISSN: 0144-8617, [retrieved on 20201113], DOI: 10.1016/J.CARBPOL.2020.117399
- LANGLET ROZENN ET AL: "Transitioning to Microplastic-Free Seed Coatings: Challenges and Solutions", POLYMERS, vol. 16, no. 14, 10 July 2024 (2024-07-10), CH, pages 1969, XP093247245, ISSN: 2073-4360, DOI: 10.3390/polym16141969
- YU LI ET AL: "Study of radiation-induced graft copolymerization of butyl acrylate onto chitosan in acetic acid aqueous solution", JOURNAL OF APPLIED POLYMER SCIENCE, vol. 90, no. 10, 29 September 2003 (2003-09-29), US, pages 2855 - 2860, XP093250978, ISSN: 0021-8995, DOI: 10.1002/app.13011

## Description

### TECHNICAL FIELD

The present invention relates to a method for coating seeds by using a seed coating composition comprising a polymer obtained by polymerization of ethylenically unsaturated monomers, conducted in the presence of a polysaccharide.

### STATE OF THE ART

Seed coating is widely used in agriculture. It is for instance common to provide seeds with a coating to protect the seeds from damage during handling or from drought or damage from lack of available water, to prevent dust and give a cosmetic appearance. In order to control the seed germination, or the germination rate, plant nutrients or other growth stimulating agents can be incorporated into the seed coating.

Such coatings can also give the advantages of protecting the seeds from pests and diseases attack and smoothing the seed surface to make planting easier. Moreover, plant protecting agents, such as pesticides (e.g. fungicides and insecticides), may be incorporated to further protect the seed from disease and/or pest attack. Such agents have the purpose of preventing infection of a plant by any pest or deterring or destroying the pest and of reducing the damage caused by it.

All this can help to achieve uniform stand establishment which not only has the benefit of protecting an investment in seeds themselves, but also maximizes planting performance per unit land.

Traditionally, seed coatings rely on synthetic polymers which are used as binders, such as those described for example in US 6,329,319 or WO2017/203261.

In the recent years, such synthetic polymers have attracted increasing environmental and health concern, as due their poor biodegradability in soil and low solubility in water they represent a source of microplastics.

Microplastics are plastic fragments less than 5 mm in size, which shed off products and enter the air, sea and soil, where they can take hundreds of years to degrade.

In this context, in order to gradually phase out synthetic polymers which can generate microplastics, European Union's Commission Regulation 2023/2055, amending Annex XVII to Regulation (EC) No 1907/2006 of the European Parliament and of the Council concerning the Registration, Evaluation, Authorisation and Restriction of Chemicals (REACH) as regards synthetic polymer microparticles, has clearly defined criteria to determine which polymers have to be considered microplastics.

A possible strategy to eliminate microplastic from seed coating is to incorporate natural polymers into synthetic polymer. For example, CN101438701 describes a film-forming agent for seed coating comprising polyvinyl alcohol and oxidized starchacrylamide copolymer. Yu Li et al. describe (J. of Applied Polymer Science (2003)) the treatment of a seed with a modified polysaccharide. The polysaccharide is grafted with a poly butyl acrylate.

However, a need still exists in the art to provide microplastic-free seed coating agents which have film-forming properties that are comparable to those of the microplastics-generating synthetic polymers traditionally used in the field of seed coating.

### SUMMARY OF THE INVENTION

It is therefore an object of the present invention a method for coating seeds comprising:
i) providing a seed coating composition comprising, on dry weight basis, from 2 to 70 % by weight (wt%) of a polymer obtained by polymerization of:
   a) from 0 to 50% by weight of at least one ethylenically unsaturated monomer selected among styrene or substituted styrene,
   b) from 10 to 70% by weight of at least one ethylenically unsaturated monomer selected among C₁-C₁₀-alkyl (meth)acrylates or cycloalkyl (meth)acrylates,
   c) from 0 to 50% by weight of at least one ethylenically unsaturated monomer different from a) and b),
      in the presence of
   d) from 30 to 90% by weight of a polysaccharide having a molecular weight Mn of 500 to 30,000 Da,
      wherein the percentage amounts of a), b), c) and d) are referred to the sum of a)+b)+c)+d);
ii) applying said seed coating composition onto seeds.

### DETAILED DESCRIPTION OF THE INVENTION

Preferably, the method for coating seeds of the present invention comprises:
i) providing a seed coating composition comprising, on dry weight basis, from 5 to 50 % by weight (wt%) of a polymer obtained by polymerization of:
   a) from 0 to 50% by weight of at least one ethylenically unsaturated monomer selected among styrene or substituted styrene,
   b) from 20 to 65% by weight of at least one ethylenically unsaturated monomer selected among C₁-C₁₀-alkyl (meth)acrylates or cycloalkyl (meth)acrylates,
   c) from 0 to 50% by weight of at least one ethylenically unsaturated monomer different from a) and b),
      in the presence of
   d) from 35 to 80% by weight of a polysaccharide having a molecular weight Mn of 500 to 30,000 Da,
      wherein the percentage amounts of a), b), c) and d) are referred to the sum of a)+b)+c)+d);
ii) applying said seed coating composition onto seeds.

According to the invention, the ethylenically unsaturated monomer a) is selected among styrene or substituted styrene. Suitable examples of substituted styrene are α-methylstyrene, ortho-, meta- or para-methylstyrene, ortho-, meta- or paraethylstyrene, o,p-dimethylstyrene, o,p- diethylstyrene, isopropylstyrene, o-methyl-p-isopropylstyrene, α-butylstyrene, 4-n-butylstyrene or 4-n-decylstyrene. Preferably a) is styrene.

According to the invention, the ethylenically unsaturated monomer b) is selected among C₁-C₁₀ alkyl (meth)acrylates or cycloalkyl (meth)acrylates.

Suitable C₁-C₁₀ alkyl (meth)acrylates include methyl methacrylate, methyl acrylate, ethyl acrylate, ethyl methacrylate, propyl acrylate, propyl methacrylate, n-butyl acrylate, n-butyl methacrylate, iso-butyl acrylate, iso-butyl methacrylate, tert-butyl acrylate, tert-butyl methacrylate, 2-ethylhexyl methacrylate, 2-ethylhexyl acrylate or mixtures thereof.

Suitable cycloalkyl (meth)acrylates may include, for example, cyclohexyl (meth)acrylate, methyl cyclohexyl (meth)acrylate, dihydrodicyclopentadienyl (meth)acrylate, trimethylcyclohexyl (meth)acrylate, t-butyl cyclohexyl (meth)acrylate or mixtures thereof. Preferred cycloalkyl (meth)acrylates are cyclohexyl methacrylate or cyclohexyl acrylate.

Preferably b) is at least one selected among ethyl acrylate, butyl acrylate or cyclohexyl methacrylate.

According to the invention, the ethylenically unsaturated monomer c) is preferably at least one selected among acrylic acid or a salt thereof, methacrylic acid or a salt thereof, itaconic acid or a salt thereof, hydroxyethyl acrylate, hydroxyethyl methacrylate, hydroxypropyl acrylate, hydroxypropyl methacrylate, 2-acrylamido-2-methylpropane sulfonic acid or a salt thereof, or acrylamide. Preferably c) is hydroxyethyl methacrylate.

According to the invention, d) is a polysaccharide.

Suitable polysaccharides have a molecular weight Mn of 500 to 30,000 Da, preferably from 500 to 20,000 Da, and are derived, by partial depolymerization, from polysaccharides such as starch, cellulose, cellulose ethers (such as carboxymethylcellulose), polygalactomannans or polygalactomannan ethers.

The average molecular weight of the polysaccharides can be determined for example by using gel permeation chromatography, after calibration with pullulan standards.

According to a preferred embodiment, the polysaccharide is a starch having a molecular weight Mn of 500 to 30,000 Da, preferably from 500 to 20,000 Da. Said starch is obtained from the degradation of natural starch or chemically modified starch. Suitable natural starches include potato, wheat, maize, rice or tapioca starch.

Also suitable are chemically modified starches, such as for example hydroxyethyl starch, hydroxypropyl starch, acetylated starch or phosphate starch.

Degradation of the starches can be effected enzymatically, oxidatively or hydrolytically through action of acids or bases. Degraded starches are commercially available. Said degraded starches can undergo further degradation, for example by treatment with hydrogen peroxide or enzymes, before or after the polymerization is started.

Suitable degraded starches are also maltodextrins. The wide range of maltodextrins commercially available are described in terms of their "Dextrose Equivalent" value (DE), which is a measure of the amount of their reducing sugars, relative to dextrose, expressed as a percentage on a dry basis. The DE of maltodextrins varies between 3 and 20 and gives an indication of their average degree of polymerization (DP). Preferably, the ethylenically unsaturated monomers a), b) and c) are selected so that theoretical glass transition temperature (Tg) of the obtained polymer is more than - 30 °C and less than 60 °C. The theoretical glass transition temperature (Tg) can be calculated by using the Fox equation (see T. G. Fox, Bull. Am. Phys. Soc., 1, 123 (1956)): $\frac{1}{Tg} = \frac{{x}_{1}}{{Tg}_{1}} + \frac{{x}_{2}}{{Tg}_{2}} + … \frac{x}{{Tg}_{n}}$ wherein x₁, x₂ and xₙ are the mass fractions of the different monomers 1,2, n and Tg₁, Tg₂, Tgₙ represent the actual glass transition temperatures in Kelvin of the corresponding homopolymers. The actual Tg values of the homopolymers are known and listed, for example, in J. Brandrup, E. H. Immergut, Polymer Handbook, 4th ed., J. Wiley, New York, 2004.

The polymer of the invention can be prepared following any of the polymerization process known in the art. Examples of these processes are: solution polymerization, emulsion polymerization, inverse emulsion polymerization, suspension polymerization, precipitation polymerization, etc., in the presence of catalytic systems and chain-transfer agents, or by a radical mediated system. Preferably, the polymer of the invention is obtained using an emulsion polymerization process.

The polymerization is usually carried out at temperatures of from 30 to 110°C, preferably from 50 to 100°C.

Thermal or redox initiation processes may be used. Conventional free radical initiators may be used such as, for example, hydrogen peroxide, t-butyl hydroperoxide, t-amyl hydroperoxide, alkali or ammonium persulfates, and azo initiators such as 4,4'-azobis(4-cyanopentanoic acid), and 2,2'-azobisisobutyronitrile ("AI BN"), typically at a level of 0.01% to 3.0% by weight, based on the weight of total monomers. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example, iron and copper, optionally further including complexing agents for the metal. Chain transfer agents such as mercaptans may be used to lower the molecular weight of the polymers. Techniques to reduce residual monomers such as, for example, subjecting the reaction mixture to steam stripping, hold times, and additional radical sources may be employed.

The polymer of the invention has a solubility in water at room temperature greater than 2 g/l, as measured according standard test OECD 120.

The seed coating composition of the invention is preferably a water-based composition and may further comprise waxes, thickeners, dispersants, non-aqueous solvents, active ingredients, and/or colorants.

Waxes may be present in amount from 0 to 25 wt%, based on the total weight of the seed coating composition. Suitable waxes may be natural waxes, mineral or synthetic waxes. They are preferably selected from carnauba wax, bees wax, sunflower wax, soy oil wax, rice bran wax, lanolin wax, sugar cane wax, palm wax, calcium stearate, paraffin wax, polyethylene wax, bees wax, or polypropylene wax.

Thickeners may be present in amount from 0 to 5 wt%, based on the total weight of the seed coating composition. Thickeners are typically water-soluble polymers which exhibit suitable suspending properties in an aqueous medium. Suitable thickeners are natural or semi-synthetic thickeners such as gum arabic, gum karaya, gum tragacanth, guar gum, hydroxylpropyl guar, locust bean gum, xanthan gum, carrageenan, alginate salt, dextran, pectine, agar, 2-hydroxyethyl cellulose, methyl cellulose, carboxymethyl cellulose, cellulose sulfate salt and mixture thereof. Suitable fully synthetic thickeners are polyvinyl alcohols, polyacrylamides, polyvinylpyrrolidone, polyethylene glycols, styrene/maleic anhydride copolymers and salts thereof and copolymers of (meth)acrylic acids/esters and salts thereof. Also suitable are associative thickeners, such as hydrophobically modified polyacrylates, hydrophobically modified cellulose ethers, hydrophobically modified polyacrylamides, hydrophobically modified polyethers and associative polyurethane thickeners.

Inorganic thickeners such as clays, organophilic clays, or silica are also suitable.

Dispersants may be present in an amount from 0 to 5 wt%, based on the total weight of the seed coating composition. Suitable dispersants include those commonly used in agricultural and crop protection applications. By way of example without limitations, nonionic dispersants include the polyalkylene glycol ethers and condensation products of alkyl phenols, aliphatic alcohols, aliphatic amines or fatty acids with ethylene oxide, propylene oxide or mixtures of ethylene and propylene oxides, such as the ethoxylated alkyl phenols or ethoxylated aryl or polyaryl phenols and carboxylic esters of polyols or polyoxyethylene; cationic dispersants include quaternary ammonium compounds and fatty amines, anionic dispersants include the salts of alkyl aryl sulfonic acids, salts of sulfated polyglycol ethers, salts of the esters of sulphosuccinic acid, or half esters thereof with nonionic surfactants, and appropriate salts of polyalkoxy phosphates, such as salts of ethoxylated alkyl- and styryl- phenol phosphates. Examples of polymeric dispersants are A-B block copolymers of ethylene oxide (EO) and propylene oxide (PO); A-B-A triblock copolymers of EO-PO-EO; ammonium and sodium salts of naphthalenesulfonic acid-formaldehyde condensates or lignin sulfonates; styrene-maleic anhydride copolymers; monobutyl/ethyl ester of poly(methyl vinyl ether/maleic acid), partial sodium salt; methyl methacrylate/polyethylene glycol graft copolymer; water-soluble (meth)acrylic copolymers.

Non-aqueous solvents may be present in an amount from 0 to 35 wt%, based on the total weight of the seed coating composition. Suitable non-aqueous solvents include glycols, polyglycols, glycol ethers, glycol esters, lactate esters, vegetable oils, vegetable oil esters, or mixtures thereof.

Specific examples of polyglycols that can suitably be used include, but are not limited to, diethylene glycol, triethylene glycol, dipropylene glycol, tripropylene glycol, polyethylene glycol (having a molecular weight between 200 to 4,000 Da, preferably from 200 to 1,000 Da), and polypropylene glycol (having a molecular weight between 200 to 4,000 Da, preferably from 200 to 1,000 Da).

Specific examples of glycol ethers which can suitably be used include, but are not limited to, ethylene glycol butyl ether, diethylene glycol dimethyl ether, diethylene glycol ethyl ether, diethylene glycol butyl ether, diethylene glycol phenyl ether, triethylene glycol butyl ether, propylene glycol methyl ether, dipropylene glycol methyl ether and dipropylene glycol dimethyl ether.

Specific examples of glycol ester compounds that can suitably be used include, but are not limited to, 1,2-ethanediol monoacetate and ethylene glycol diacetate, 2-ethoxy ethyl acetate, diethylene glycol ethyl ether acetate, diethylene glycol butyl ether acetate, or dipropylene glycol methyl ether acetate.

Suitable lactate esters that can be used include, but are not limited to, ethyl lactate, methyl lactate, butyl lactate, or combinations thereof.

Active ingredients may be present in an amount from 0 to 10 wt%, based on the total weight of the seed coating composition. Suitable active ingredients include plant protecting agents, insecticides, acaricides, bactericides, fungicides, fertilizers, microorganisms acting as biopesticides, herbicides, insect attractants, insect repellents, molluscicides, nematicides, plant growth regulators, rodenticides, mammal repellents, bird repellents, virucides, or mixtures thereof.

Colorants may be present in an amount from 0 to 30 wt%, based on the total weight of the seed coating composition. Colorants may be dyes, pigments, or fillers. Usually, the colorants are included in the seed coating composition, so that an observer can immediately determine that the seeds are treated.

Suitable pigments include pigment red 112 (CAS No. 6535-46-2), pigment red 2 (CAS No. 6041-94-7), pigment red 48:2 (CAS No. 7023-61-2), pigment blue 15:3 (CAS No. 147-14-8), pigment green 36 (CAS No. 14302-13- 7), pigment green 7 (CAS No. 1328-53-6), pigment yellow 74 (CAS No. 6358-31-2), pigment orange 5 (CAS No. 3468-63-1), pigment violet 23 (CAS No. 6358-30-1), pigment black 7 (CAS No. 97793-37-8), pigment white 6 (CAS No. 98084-96-9), or combinations thereof.

Suitable dyes include anthraquinone, triphenylmethane, phthalocyanine and derivatives thereof, diazonium salts, or combinations thereof.

Suitable fillers are calcium carbonate, calcium sulphate, talc, diatomaceous earths, clays, such as attapulgite, sepiolite, kaolin, calcium sulfate anhydrite, or pyrophylite. The seed coating composition can further comprise other ingredients commonly used in the field, such as wetting agents, emulsifiers, antifoaming agents, antifreeze agents, preservatives, plasticizers, drying control agents, or adhesives.

Suitable seeds include agricultural seeds, vegetable seeds, herb seeds, wildflower seeds, ornamental seeds, grass seeds, tree seeds, bush seeds, or any combination thereof. The seeds may be of the order of Monocotyledoneae or of the order of Dicotyledoneae. Suitable seeds include field crop seeds like soybean, cotton, maize, cereals including but not limited to wheat, barley, oat and rye, oil seed rape (or canola) sunflower, sugar beet, flax, rapeseed, tobacco, hemp seed, alfalfa, signal grass, sorghum, chick pea, beans, peas, rice, and sugar cane. Examples of suitable vegetable seeds include asparagus, chives, celery, leek, garlic, beetroot, spinach, beet, turnip, endive, chicory, parsley, fennel, radish, black salsify, eggplant, carrot, onion, tomato, pepper, lettuce, snap bean, shallot, safflower, chicory, and crops from the Brassicaceae or Cucurbitaceae families.

The seed coating composition of the invention can be prepared by simply mixing, under high shear stirring, the various components.

The equipment utilized for applying the coating composition onto seeds can include but are not limited to drum coaters, rotary coaters, tumbling drums, fluidized beds and spouted beds, but any suitable equipment or technique may be employed. The seeds may be coated via a batch or continuous coating process.

In one embodiment the seed coating can be performed within a rotary coater, wherein the seeds are placed within a rotating chamber, which pushes the seeds against the inside wall of the chamber. Centrifugal forces and mixing bars placed inside the coater allow the seed to rotate and mix with the coating composition. The coating materials is applied by pumping into the proximate center of the coater onto an atomizer disk that rotates along with the coating chamber. Upon hitting the atomizer disk, small drops of aqueous composition are then directed outward onto the seed.

In another embodiment, the coating of the seeds is carried out in a tumbling drum. In this equipment the aqueous seed coating composition is sprayed, for example trough hydraulic nozzles, on the seed. The seed mass is then rounded and smoothed by the tumbling action of the drum and the coating layers are compacted by compression from the weight of material.

Typically, the amount of seed coating composition applied to the seed can be from 0.1 to 200 g (dry weight) per kg of seeds, preferably from 0.15 to 150 g (dry weight) per kg of seeds, more preferably from 0.25 to 100 g (dry weight) per kg of seeds. The content of present invention is further illustrated by the following examples.

### EXAMPLES

### Example 1

275 g of a dextrin from potato starch (Avedex^{®} 125 HI 12, commercially available from Avebe) was dispersed with stirring in 529 g of demineralizer water in a 1 L glass reactor with a cooling/heating jacket. The dextrin was dissolved by heating the mixture to 75°C; after dextrin dissolution was completed, 0.06 g of ferrous (II) sulfate heptahydrate dissolved in small amount of water was added into the reactor. After 15 minutes, 11.3 g of 35% strength hydrogen peroxide was added. After 120 minutes, the dextrin degradation was complete. Then the reactor temperature was raised to 80°C and the monomers emulsion and initiator feeds were started. 115 g of water, 2.4 g of 30% solution of sodium lauryl sulfate, 85.6 g of styrene and 158.9 g of n-butyl acrylate were fed during 120 minutes. 21.1 g of 16% solution of hydrogen peroxide was fed simultaneously with the monomer feed during 120 min. The reactor temperature was kept at 80°C during the feeds and 60 minutes after for post-polymerization. Then the mixture was cooled down at room temperature. Filtration was performed using a 50 µm filter cloth. A finely divided dispersion with a solid content of 41% is obtained.

### Example 2

275 g of a dextrin from potato starch (Avedex^{®} 125 HI 12, commercially available from Avebe) was dispersed with stirring in 529 g of demineralizer water in a 1 L glass reactor with a cooling/heating jacket. The dextrin was dissolved by heating the mixture to 75°C; after dextrin dissolution was completed, 0.06 g of ferrous (II) sulfate heptahydrate, dissolved in small amount of water, was added into the reactor. After 15 minutes, 11.3 g of 35% strength hydrogen peroxide was added. After 120 minutes, the dextrin degradation was complete. Then the reactor temperature was raised to 80°C and the monomers emulsion and initiator feeds were started. 115 g of water, 2.4 g of 30% solution of sodium lauryl sulfate, 244.6 g of ethyl acrylate were fed during 120 minutes. 21.1 g of 16% solution of hydrogen peroxide was fed simultaneously with the monomer feed during 120 min. The reactor temperature was kept at 80°C during the feeds and 60 minutes after for post-polymerization. Then the mixture was cooled down at room temperature. Filtration was performed using a 50 µm filter cloth. A finely divided dispersion with a solid content of 41% is obtained.

### Example 3

275 g of a dextrin from potato starch (Avedex^{®} 125 HI 12, commercially available from Avebe) was dispersed with stirring in 529 g of demineralizer water in a 1 L glass reactor with a cooling/heating jacket. The dextrin was dissolved by heating the mixture to 75°C; after dextrin dissolution was completed, 0.06 g of ferrous (II) sulfate heptahydrate dissolved in small amount of water was added into the reactor. After 15 minutes, 11.3 g of 35% strength hydrogen peroxide was added. After 120 minutes, the dextrin degradation was complete. Then the reactor temperature was raised to 80°C and the monomers emulsion and initiator feeds were started. 115 g of water, 2.4 g of 30% solution of sodium lauryl sulfate, 85.8 g of methyl methacrylate and 159 g di n-butyl acrylate were fed during 120 minutes. 21.1 g of 16% solution of hydrogen peroxide was fed simultaneously with the monomer feed during 120 min. The reactor temperature was kept at 80°C during the feeds and 60 minutes after for post-polymerization. Then the mixture was cooled down at room temperature. Filtration was performed using a 50 µm filter cloth. A finely divided dispersion with a solid content of 41% is obtained.

### Example 4

275 g of a dextrin from potato starch (Avedex^{®} 125 HI 12, commercially available from Avebe) was dispersed with stirring in 529 g of demineralizer water in a 1 L glass reactor with a cooling/heating jacket. The dextrin was dissolved by heating the mixture to 75°C; after dextrin dissolution was completed, 0.06 g of ferrous (II) sulfate heptahydrate dissolved in small amount of water was added into the reactor. After 15 minutes, 11.3 g of 35% strength hydrogen peroxide was added. After 120 minutes, the dextrin degradation was complete. Then the reactor temperature was raised to 80°C and the monomers emulsion and initiator feeds were started. 115 g of water, 2.4 g of 30% solution of sodium lauryl sulfate, 85.8 g of 2-hydroxyethyl acrylate and 159 g di n-butyl acrylate were fed during 120 minutes. 21.1 g of 16% solution of hydrogen peroxide was fed simultaneously with the monomer feed during 120 min. The reactor temperature was kept at 80°C during the feeds and 60 minutes after for post-polymerization. Then the mixture was cooled down at room temperature. Filtration was performed using a 50 µm filter cloth. A finely divided dispersion with a solid content of 41% is obtained.

### Example 5

161 g of a dextrin from potato starch (Avedex^{®} 125 HI 12, commercially available from Avebe) was dispersed with stirring in 287 g of demineralizer water in a 1 L glass reactor with a cooling/heating jacket and heat to 75°C. Then 0.04 g of ferrous (II) sulfate heptahydrate dissolved in small amount of water was added into the reactor. After 15 minutes, 8 g of 35% strength hydrogen peroxide was added. After 120 minutes, the dextrin degradation was complete. Then the reactor temperature was raised to 80°C and the monomers emulsion and initiator feeds were started. 80 g of water, 3,7 g of 30% solution of sodium lauryl sulfate, 134 g of n-butyl acrylate, and 134 g of 2-hydroxyethyl methacrylate were fed during 120 minutes. 32 g of 5% solution of hydrogen peroxide was fed simultaneously with the monomer feed during 120 minutes. The reactor temperature was kept at 80°C during the feeds and 60 minutes after for post-polymerization. Then the mixture was cooled down at room temperature. Filtration was performed using a 50 µm filter cloth. A finely divided dispersion with a solid content of 41% is obtained.

### Comparative Example A

Aqueous dispersion of a synthetic acrylic copolymer derived from ethyl acrylate, methyl methacrylate, and acrylic acid.

### Comparative Example B

Aqueous dispersions of a synthetic acrylic polymer derived from butyl acrylate and styrene.

### Comparative Example C

136.4 g of a dextrin from potato starch (Avedex^{®} 125 HI 12, commercially available from Avebe) was dispersed with stirring in 475.4 g of demineralizer water in a 1 L glass reactor with a cooling/heating jacket. The dextrin was dissolved by heating the mixture to 75°C; after dextrin dissolution was completed, 0.06 g of ferrous (II) sulfate heptahydrate dissolved in small amount of water was added into the reactor. After 15 minutes, 11.1 g of 35% strength hydrogen peroxide was added. After 120 minutes, the dextrin degradation was complete. Then the reactor temperature was raised to 80°C and the monomers emulsion and initiator feeds were started. 147.4 g of water, 3.7 g of 30% solution of sodium lauryl sulfate, 129 g of styrene and 239.5 g of n-butyl acrylate were fed during 120 minutes. 46 g of 11% solution of hydrogen peroxide was fed simultaneously with the monomer feed during 120 min. The reactor temperature was kept at 80°C during the feeds and 60 minutes after for post-polymerization. Then the mixture was cooled down at room temperature. Filtration was performed using a 50 µm filter cloth. A finely divided dispersion with a solid content of 41% is obtained.

The percentages by weight (wt%) of each component used in the preparation of the inventive polymers of Examples 1-5 and the comparative polymers of Comparative Examples A-C are reported in Table 1. The amounts reported for the polysaccharides are based on their active content.

**Table 1**

| | 1 | 2 | 3 | 4 | 5 | A | B | C |
|---|---|---|---|---|---|---|---|---|
| Avedex^{®} 125 HI 12 | 50 | 50 | 50 | 50 | 35 | | | 25 |
| Butyl acrylate | 32.5 | | 32.5 | 32.5 | 32.5 | | 65 | 48.8 |
| Styrene | 17.5 | | | | | | 35 | 26.2 |
| Ethyl acrylate | | 50 | | | | 51.5 | | |
| Methyl methacrylate | | | 17.5 | | | 45.4 | | |
| Hydroxyethyl methacrylate | | | | 17.5 | 32.5 | | | |
| Acrylic acid | | | | | | 3.1 | | |

### Applicative tests

### Film-forming properties evaluation

For each example, film-forming properties were evaluated by using the following method. 8 g of aqueous polymer dispersion are disposed on a Petri dish (diameter: 11 cm), covering all its surface. The Petri dish then placed in oven at 54 °C for 24 hours. Each sample was then evaluated by assigning a score from 1 to 3, with the following meaning: 1) sticky surface, and/or cracked film; 2) a uniform film is obtained only after addition of 25 wt% (based on the total weight of the composition) of methyl propylene glycol; 3) uniform film and not sticky surface.

The results of the film formation tests are reported in Table 2.

**Table 2**

| Examples | Amount of component d) (wt%) | Film-forming score |
|---|---|---|
| 1 | 50 | 2 |
| 2 | 50 | 2 |
| 3 | 50 | 2 |
| 4 | 50 | 2 |
| 5 | 35 | 2 |
| A | 0 | 3 |
| B | 0 | 1 |
| C | 25 | 2 |

The results reported in Table 2 show that inventive polymers (Examples 1-5) have comparable or improved film-forming properties respect to the comparative synthetic acrylic polymers (Comparative Examples A and B).

### Microplastics - Solubility test

As suggested by EU's Commission Regulation 2023/2055 (see in particular Appendix 16, Entry 78 - "Rules on proving solubility"), standard test OECD 120 was used to assess the solubility of the polymers in water. According to the Regulation, a polymer is not considered a source of microplastics when dissolved or dispersed in water, if its solubility in water at room temperature is greater 2 g/I.

The results of solubility test are reported in Table 3.

**Table 3**

| Examples | Amount of component d) (wt%) | Solubility in water (g/I) | Microplastics? |
|---|---|---|---|
| 1 | 50 | 3.8 | No |
| 5 | 35 | 3.9 | No |
| B | 0 | 0.5 | Yes |
| C | 25 | 1.2 | Yes |

According to results reported in Table 3, the inventive polymers of Examples 1 and 5 have a solubility in water at room temperature above 2 g/l, so they cannot be considered microplastics. On the other hand, the polymers of Comparative Examples B and C have to be considered microplastics, as they have no or lower content of natural polymer (component d)) and therefore they have poor solubility (i.e. less than 2 g/l) in water at room temperature.

## Claims

1. A method for coating seeds comprising:
i) providing a seed coating composition comprising, on dry weight basis, from 2 to 70 % by weight (wt%) of a polymer obtained by polymerization of:
a) from 0 to 50% by weight of at least one ethylenically unsaturated monomer selected among styrene or substituted styrene,
b) from 10 to 70% by weight of at least one ethylenically unsaturated monomer selected among C₁-C₁₀-alkyl (meth)acrylates or cycloalkyl (meth)acrylates,
c) from 0 to 50% by weight of at least one ethylenically unsaturated monomer different from a) and b),
in the presence of
d) from 30 to 90% by weight of a polysaccharide having a molecular weight Mn of 500 to 30,000 Da,
wherein the percentage amounts of a), b), c) and d) are referred to the sum of a)+b)+c)+d);
ii) applying said seed coating composition onto seeds.

2. The method for coating seeds according to claim 1, wherein the polysaccharide having a molecular weight Mn of 500 to 30,000 Da is derived, by partial de polymerization, from starch, cellulose, cellulose ethers, polygalactomannans or polygalactomannan ethers.

3. The method for coating seeds according to claim 1, wherein the polysaccharide having a molecular weight Mn of 500 to 30,000 Da is a starch having a molecular weight Mn of 500 to 30,000 Da.

4. The method for coating seeds according to claim 1, wherein the polymer is obtained by polymerization in the presence of d) from 35 to 80% by weight of a polysaccharide having a molecular weight Mn of 500 to 30,000 Da.

5. The method for coating seed according to claim 1, wherein the polymer is obtained by polymerization of b) from 20 to 65% by weight of at least one ethylenically unsaturated monomer selected among C₁-C₁₀-alkyl (meth)acrylates or cycloalkyl (meth)acrylates.

6. The method for coating seeds according to claim 1, wherein a) is styrene.

7. The method for coating seeds according to claim 1, wherein b) is at least one selected among ethyl acrylate, butyl acrylate or cyclohexyl methacrylate.

8. The method for coating seeds according to claim 1, wherein c) is hydroxyethyl methacrylate.

9. The method for coating seeds according to claim 1, wherein the polymer has a solubility in water at room temperature greater than 2 g/l, as measured according to standard test OECD 120.

10. The method for coating seeds according to claim 1, wherein the seed coating composition further comprises waxes, thickeners, dispersants, non-aqueous solvents, active ingredients, and/or colorants.

## Patentansprüche

1. Verfahren zur Beschichtung von Saatgut, umfassend:
i) Bereitstellen einer Saatgutbeschichtungszusammensetzung, die, bezogen auf das Trockengewicht, 2 bis 70 Gew.-% eines Polymers enthält, das durch Polymerisation von:
a) 0 bis 50 Gew.-% mindestens eines ethylenisch ungesättigten Monomers, ausgewählt aus Styrol oder substituiertem Styrol,
b) 10 bis 70 Gew.-% mindestens eines ethylenisch ungesättigten Monomers, ausgewählt aus C₁-C₁₀-Alkyl(meth)acrylaten oder Cycloalkyl(meth)acrylaten,
c) 0 bis 50 Gew.-% mindestens eines von a) und b) verschiedenen ethylenisch ungesättigten Monomers, in Gegenwart von
d) 30 bis 90 Gew.-% eines Polysaccharids mit einem Molekulargewicht Mn von 500 bis 30.000 Da, wobei sich die prozentualen Anteile von a), b), c) und d) auf die Summe aus a) + b) + c) + d) beziehen;
ii) Aufbringen der genannten Saatgutbeschichtungszusammensetzung auf Saatgut.

2. Verfahren zur Beschichtung von Saatgut nach Anspruch 1, wobei das Polysaccharid mit einem Molekulargewicht Mn von 500 bis 30.000 Da durch partielle Depolymerisation aus Stärke, Cellulose, Celluloseethern, Polygalactomannanen oder Polygalactomannanethern gewonnen wird.

3. Verfahren zur Beschichtung von Saatgut gemäß Anspruch 1, wobei das Polysaccharid mit einem Molekulargewicht Mn von 500 bis 30.000 Da eine Stärke mit einem Molekulargewicht Mn von 500 bis 30.000 Da ist.

4. Verfahren zur Beschichtung von Saatgut gemäß Anspruch 1, wobei das Polymer durch Polymerisation in Gegenwart von d) 35 bis 80 Gew.-% eines Polysaccharids mit einem Molekulargewicht Mn von 500 bis 30.000 Da erhalten wird.

5. Verfahren zur Beschichtung von Saatgut nach Anspruch 1, wobei das Polymer durch Polymerisation von b) 20 bis 65 Gew.-% mindestens eines ethylenisch ungesättigten Monomers, ausgewählt aus C₁-C₁₀-Alkyl(meth)acrylaten oder Cycloalkyl(meth)acrylaten, erhalten wird.

6. Verfahren zur Beschichtung von Saatgut nach Anspruch 1, wobei a) Styrol ist.

7. Verfahren zur Beschichtung von Saatgut nach Anspruch 1, wobei b) mindestens eines, ausgewählt aus Ethylacrylat, Butylacrylat oder Cyclohexylmethacrylat ist.

8. Verfahren zur Beschichtung von Saatgut nach Anspruch 1, wobei c) Hydroxyethylmethacrylat ist.

9. Verfahren zur Beschichtung von Saatgut gemäß Anspruch 1, wobei das Polymer eine Löslichkeit in Wasser bei Raumtemperatur von mehr als 2 g/l aufweist, gemessen gemäß dem Standardtest OECD 120.

10. Verfahren zur Beschichtung von Saatgut gemäß Anspruch 1, wobei die Saatgutbeschichtungszusammensetzung ferner Wachse, Verdickungsmittel, Dispergiermittel, nichtwässrige Lösungsmittel, Wirkstoffe und/oder Farbstoffe umfasst.

## Revendications

1. Un procédé d'enrobage de semences comprenant :
i) la fourniture d'une composition d'enrobage de semences comprenant, sur la base du poids sec, de 2 à 70 % en poids (% pds) d'un polymère obtenu par polymérisation de :
a) de 0 à 50 % en poids d'au moins un monomère à insaturation éthylénique choisi parmi le styrène ou le styrène substitué,
b) de 10 à 70 % en poids d'au moins un monomère à insaturation éthylénique choisi parmi les (méth)acrylates d'alkyle en C₁-C₁₀ ou les (méth)acry-lates de cycloalkyle,
c) de 0 à 50 % en poids d'au moins un monomère à insaturation éthylénique différent de a) et b),
en présence de
d) de 30 à 90 % en poids d'un polysaccharide présentant un poids moléculaire Mn de 500 à 30 000 Da,
dans lequel les quantités en pourcentage de a), b), c) et d) sont rapportées à la somme de a)+b)+c)+d) ;
ii) l'application de ladite composition d'enrobage de semences sur des semences.

2. Le procédé d'enrobage de semences selon la revendication 1, dans lequel le polysaccharide présentant un poids moléculaire Mn de 500 à 30 000 Da est dérivé, par dépolymérisation partielle, de l'amidon, de la cellulose, d'éthers de cellulose, de polygalactomannanes ou d'éthers de polygalactomannane.

3. Le procédé d'enrobage de semences selon la revendication 1, dans lequel le polysaccharide présentant un poids moléculaire Mn de 500 à 30 000 Da est un amidon présentant un poids moléculaire Mn de 500 à 30 000 Da.

4. Le procédé d'enrobage de semences selon la revendication 1, dans lequel le polymère est obtenu par polymérisation en présence de d) de 35 à 80 % en poids d'un polysaccharide présentant un poids moléculaire Mn de 500 à 30 000 Da.

5. Le procédé d'enrobage de semences selon la revendication 1, dans lequel le polymère est obtenu par polymérisation de b) de 20 à 65 % en poids d'au moins un monomère à insaturation éthylénique choisi parmi les (méth)acrylates d'alkyle en C₁-C₁₀ ou les (méth)acrylates de cycloalkyle.

6. Le procédé d'enrobage de semences selon la revendication 1, dans lequel a) est le styrène.

7. Le procédé d'enrobage de semences selon la revendication 1, dans lequel b) est au moins l'un choisi parmi l'acrylate d'éthyle, l'acrylate de butyle ou le méthacrylate de cyclohexyle.

8. Le procédé d'enrobage de semences selon la revendication 1, dans lequel c) est le méthacrylate d'hydroxyéthyle.

9. Le procédé d'enrobage de semences selon la revendication 1, dans lequel le polymère présente une solubilité dans l'eau à température ambiante supérieure à 2 g/l, telle que mesurée selon l'essai normalisé OCDE 120.

10. Le procédé d'enrobage de semences selon la revendication 1, dans lequel la composition d'enrobage de semences comprend en outre des cires, des épaississants, des dispersants, des solvants non aqueux, des ingrédients actifs et/ou des colorants.
